(19) Europäisches Patentamt
European Patent Office
Office européen des brevets

(11) Publication number: **0 285 728 B1**

(12) **EUROPEAN PATENT SPECIFICATION**

(45) Date of publication of patent specification: **24.06.92**

(51) Int. Cl.[5]: **H01G 9/02**, H01G 9/24

(21) Application number: **87311473.0**

(22) Date of filing: **24.12.87**

(54) **Solid electrolytic capacitor, and method of manufacturing same.**

(30) Priority: **07.04.87 JP 86584/87**

(43) Date of publication of application:
**12.10.88 Bulletin 88/41**

(45) Publication of the grant of the patent:
**24.06.92 Bulletin 92/26**

(84) Designated Contracting States:
**DE FR GB NL**

(56) References cited:
**EP-A- 0 264 786**
**FR-A- 1 221 171**
**FR-A- 1 290 087**

(73) Proprietor: **NITSUKO CORPORATION**
**260, Kitamikata Takatsu-ku**
**Kawasaki-shi Kanagawa 213(JP)**

(72) Inventor: **Harakawa, Yoshihiro**
**260, Kitamikata Takatsu-ku**
**Kawasaki-shi Kanagawa(JP)**
Inventor: **Izawa, Koji**
**260, Kitamikata Takatsu-ku**
**Kawasaki-shi Kanagawa(JP)**
Inventor: **Takeuchi, Hidemitsu**
**260, Kitamikata Takatsu-ku**
**Kawasaki-shi Kanagawa(JP)**
Inventor: **Nakamura, Shinji**
**260, Kitamikata Takatsu-ku**
**Kawasaki-shi Kanagawa(JP)**
Inventor: **Toita, Sadamu**
**260, Kitamikata Takatsu-ku**
**Kawasaki-shi Kanagawa(JP)**

(74) Representative: **Diamond, Bryan Clive et al**
**Gee & Co., Chancery House, Chancery Lane**
**London WC2A 1OU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention relates to a solid electrolytic capacitor using an organic semiconductor as an electrolyte. More particularly, the invention relates to a solid electrolytic capacitor in which a polymer of a heterocyclic compound such as pyrrole, furan or thiophene is used as a solid electrolyte, and to a method of manufacturing this capacitor.

Conventionally, solid electrolytic capacitors use manganese dioxide ($MnO_2$) or 7,7,8,8-tetracyanoquinodimethane (TCNQ) salt as a solid electrolyte.

When $MnO_2$ is employed as the solid electrolyte, a layer of $MnO_2$ is formed on an anodic oxide film formed on the body of an anode. Ordinarily, the manufacturing method adopted as a method of forming the $MnO_2$ layer is as follows:

(1) the anodic oxide film formed on the surface of the anode body is impregnated with manganese nitrate;

(2) the $MnO_2$ layer is formed on the anodic oxide film by thermal decomposition;

(3) reformation is carried out; and

(4) the aforementioned steps (1) to (3) are repeated three to five times to form the $MnO_2$ layer on the anodic oxide film of the anode body.

When a salt of TCNQ is employed as the solid electrolyte, a layer of TCNQ salt is formed on an anodic oxide film formed on the body of an anode. Ordinarily, the manufacturing method adopted as a method of forming the TCNQ salt layer is as follows: Specifically, the TCNQ salt is liquified by being melted at 110 - 150°C if the salt is e.g. quinolinium di-(tetracyanoquinodimethane) salt and at 280 - 290°C if the salt is N-n-propylisoquinoline tetracyanoquinodimethane salt, the anode body is impregnated with the molten solution of TCNQ salt, and the body is cooled rapidly to form the layer of TCNQ salt on the anodic oxide film of the anode body.

Both the method of forming the $MnO_2$ layer and that for forming the TCNQ salt layer are disadvantageous in that they involve very complicated and costly manufacturing processes, the specific resistance or ESR of the capacitors is high and there is a large leakage current. Accordingly, in order to alleviate the aforementioned problems relating to these manufacturing processes and capacitor characteristics, a novel solid electrolytic capacitor has been disclosed in which a polymer layer of a heterocyclic compound is used as the solid electrolyte. For example, see the specification of Japanese Patent Application Laid-Open Publication (KOKAI) No. 61-2315.

A solid electrolytic capacitor of this type in which the polymer layer of a heterocyclic compound is used as the solid electrolyte has a capacitor element constructed as follows:

Specifically, a dielectric oxide layer such as aluminum oxide ($Al_2O_3$) is formed on the surface of a metal plate on which the dielectric oxide film or the like is capable of being formed. A polymer layer of a heterocyclic compound is formed on the dielectric oxide layer by electrolytic oxidation polymerization in an electrolyte solution in which a heterocyclic compound such as pyrrole, furan or thiophene has been dissolved. The polymer layer serves as the solid electrolyte. A conductive layer electrically connecting a terminal is formed on the polymer layer, and terminals are attached to the metal plate and conductive layer, thereby fabricating the capacitor element.

However, problems arise even in this conventional solid electrolytic capacitor using the polymer layer of a heterocyclic compound as the solid electrolyte. Specifically, when the polymer layer of the heterocyclic compound is formed on the dielectric oxide layer in the process for manufacturing the capacitor element, the dielectric oxide layer is caused to deteriorate, the maximum voltage which the capacitor withstands declines and the amount of leakage current increases. The reasons are as follows:

Specifically, in the process through which the polymer layer of the heterocyclic compound is formed on the dielectric oxidation layer of the metal plate, the dielectric oxidation layer is deteriorated by the electric current during polymerization, as a result of which the amount of leakage current and dielectric loss increase, differences occur from one manufactured product to another, and yield declines due to a deterioration in insulation. Thus, many problems are encountered in terms of manufacturing uniform products economically. Consequently, at present the above-described solid electrolytic capacitor has yet to be realized as a commercial product and marketed.

The present invention has been devised in view of the foregoing circumstances, and its object is to provide a solid electrolytic capacitor using a polymer layer of a heterocyclic compound as a solid electrolyte in which leakage current is greatly reduced and the capacitor characteristics are markedly improved without increasing equivalent series resistance (ESR), i.e. without increasing dielectric loss ($\tan\delta$).

Another object of the invention is to provide a method of manufacturing the aforementioned solid electrolytic capacitor.

The solid electrolytic capacitor in accordance with the present invention has a metal body; a dielectric layer of an oxide formed on a surface of said metal body; a polymer layer of a heterocylic compound as solid electrolyte formed on said dielectric layer; a conductive layer formed on at least a portion of said polymer layer; and terminals provided respectively on said metal body and said conductive layer;

characterised in that said polymer layer around defect interfaces of the oxidised dielectric layer has been converted into insulator regions.

A method of making a solid electrolytic capacitor, comprises forming electrolytically on a surface of a metal body a dielectric layer of an oxide; forming a polymer layer of a heterocylic compound as solid electrolyte on said die electric layer; forming on at least a portion of the polymer layer an electrically conductive layer and providing a terminal on the metal body and a terminal on the conductive layer; and

characterised by converting the polymer layer around defect interfaces of the dielectric into an insulator regions.

Other features and advantages of the present invention will be apparent from the following description taken in conjunction with the accompanying drawings, in which like reference characters designate the same or similar parts in Figures 1, 2 and 6.

In the accompanying drawings:

Fig. 1(A) is a sectional view of a solid electrolytic capacitor element according to the present invention;

Fig. 1(B) is an enlarged sectional view of one example of the interface of a dielectric oxidation layer and a polymer layer of a heterocyclic compound;

Fig. 2(A) is a vertical section of apparatus during the forming of the polymer layer of a heterocyclic compound;

Fig. 2(B) is a sectional view illustrating the capacitor element before the formation of an undercoat layer;

Figs. 3(A) and 3(B) are diagrams illustrating the distribution of leakage current of the solid electrolytic capacitor respectively before and after being subjected to an ageing treatment;

Fig. 4 is a graph showing leakage current - voltage characteristics before and after the aforementioned ageing treatment;

Fig. 5 shows the results of two experiments regarding leakage current and dielectric loss for a solid electrolytic capacitor of the invention, and two conventional solid electrolytic capacitors;

Fig. 6 is a diagram illustrating the general construction of an apparatus for forming a polymer layer of a heterocylic compound; and

Fig. 7 shows the relationship between the electrolyte solution temperature and polypyrrole layer formation.

Fig. 1(A) is a sectional view illustrating a solid electrolytic capacitor according to the present invention, and Fig. 1(B) is an enlarged sectional view illustrating the interface of a dielectric oxidation layer and a polymer layer of a heterocyclic compound.

The solid electrolytic capacitor of the illustrated embodiment includes an aluminium plate 11 serving as a substrate of a capacitor element and capable of having a dielectric oxidation layer formed thereon, an aluminium oxide ($A\ell_2O_3$) layer 12 formed as a dielectric oxidation on the surface of the aluminium plate 11, a layer 13 of a polymer of the heterocylic compound pyrrole (polypyrrole) of formula:

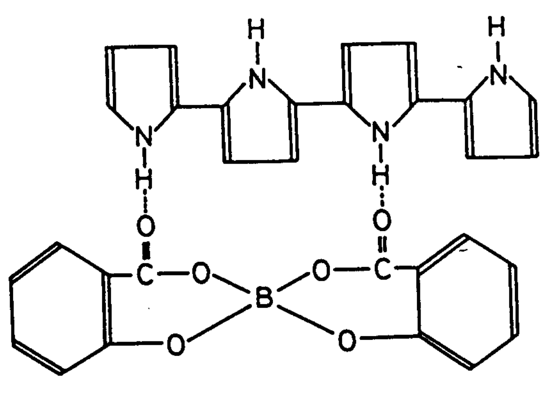

formed on the surface of the aluminium oxide layer 12, a graphite layer 15 formed as a conductive layer for terminal extraction on the polypyrrole layer 13, and a silver paste layer 16 formed on the graphite layer 15.

Electrode terminals 17, 18 are attached to the silver paste layer 16 and aluminum plate 11, respectively, thereby forming a capacitor element.

An overcoat layer 19 consisting of, e.g. a polybutadiene resin is formed on the top surface of the silver paste layer 16.

As will be described in detail below, the polypyrrole layer 13 formed on the aluminum oxide layer 12 is formed by electrolytic oxidation polymerization. In the process for forming the polypyrrole layer 13, the aluminum oxide layer 12 deteriorates at several places due to the current that flows when polymerization is carried out, whereby defects 14 are produced in the aluminum oxide layer 12, as shown in (B) of Fig. 1.

In the solid electrolytic capacitor using the polypyrrole layer 13 as an electrolyte, the defects 14 in the aluminum oxide layer 12 cause an increase in leakage current LC, a variance from one product to another, and a decline in yield due to a deterioration in insulation.

In accordance with the illustrated embodiment, these problems are solved by insulating the vicinity 13a of the defect interface of the polypyrrole layer 13 which has grown to the interface of the defect 14 of the aluminum oxide layer 12. As a result, as will be described in detail later, the leakage current LC can be markedly reduced without bringing about an increase in dielectric loss, a variance from one product to another can be minimized and a decline in yield caused by a deterioration in insulation can be greatly reduced. Thus, a greatly improved capacitor can be obtained.

The method of forming the alumimum oxide layer 12, the polypyrrole layer 13, the graphite layer 15 and the silver paste layer 16, as well as the method of insulating the vicinity 13a of the defect interface of the polypyrrole layer 13 which has grown to the interface of the defects 14 of the aluminum oxide layer 12, will now be described.

First, the surface of the aluminum plate 11 is roughened by an etching treatment, then the aluminum oxide ($Al_2O_3$) layer 12 is formed by a well-known formation process on the roughened surface of the aluminum plate 11. The aluminum oxide layer 12 is formed by using the aluminum plate 11 as an anode and applying a predetermined formation voltage (10 V - 50 V) thereto in e.g. an adipic acid-type solution.

Next, as shown in (A) of Fig. 2, the polypyrrole layer 13 is formed by preparing an electrolyte solution L which includes pyrrole and ammonium borodisalicylate (ABS) and which contains acetonitrile or acetone as the solvent, pouring the electrolyte solution L into a stainless steel vessel 10, dipping the aluminum plate 11 having the aluminum oxide layer 12 formed on its surface into the electrolyte solution L, and supplying a predetermined direct current using the stainless steel vessel 10 as a cathode and the aluminum plate 11 as an anode. As a result, electrolytic oxidation polymerization takes place in the electrolyte solution so that a polypyrrole layer having the chemical structure shown above is formed on the aluminum oxide layer 12. The thickness of the polypyrrole layer is 20 - 50 $\mu$m.

Since the polymer of pyrrole, that is to say the polypyrrole layer formed by electrolytic oxidation polymerization on the dielectric oxidation layer (such as the aluminum oxide layer 12) is a polymer in which the N-H radical of the pyrrole molecules and ammonium borodisalicylate (ABS) supporting electrolyte are hydrogen bonded as shown by the broken bond in the formula above, the electrolytic oxidation polymerization should be carried out in an electrolyte solution which includes pyrrole and the supporting electrolyte in order to form the pyrrole. Use should be made of a supporting electrolyte containing boric acid and any one of the following ingredients:

(1) an aliphatic acid, aromatic carboxylic acid or salt thereof;

(2) an aliphatic or aromatic compound, or salt thereof, having two or more carbonyl radicals ;

(3) an aliphatic or aromatic compound, or salt thereof, having at least one hydroxyl (-OH) radical and at least one carboxylic acid (-COOH) radical ; and

(4) an aliphatic or aromatic compound, or salt thereof, having at least one amine ($-NH_2$) radical and at least one carboxylic acid (-COOH) radical.

It is also possible to use a boron compound obtained by chemically combining boric acid and the above mentioned ingredients (1) to (4) as the supporting electrolyte.

To form the graphite layer 15 and silver paste layer 16 on the polypyrrole layer 13, first the aluminum plate 11 having the polymer layer 13 thereon is dipped into a graphite solution, after which the graphite on the layer 13 is allowed to harden to form the graphite layer 15. The resulting structure is then dipped into a silver paste solution to coat the graphite layer 15 with the silver paste. This is then allowed to harden to form the silver paste layer 16.

The result of the foregoing steps is the capacitor element having the cross sectional structure shown in Fig. 2(B).

When the polypyrrole layer 13 is formed on the aluminum oxide layer 12 by electrolytic oxidation polymerization as set forth above, the defect 14 is produced in the aluminum oxide layer 12, as shown in (B) of Fig. 1. This increases the leakage current of the solid electrolytic capacitor. Therefore, a characterizing feature of the present embodiment is to insulate the region 13a of the polypyrrole layer 13 near the defect interface where the region has grown into the interface of the defect 14.

As seen from the entirety of the polypyrrole layer 13, the region 13a of the polypyrrole layer 13 near the defect is extremely small. Therefore, even if the region 13a is insulated, the leakage current LC can be markely reduced without increasing the dielectric loss (tan $\delta$) of the capacitor, as is indicated by experimental results described later.

One example of insulating the region 13a of polypyrrole layer 13 which has grown in the interface of the defect 14 of the aluminum oxide layer 12 will now be described.

The solid electrolytic capacitor element having the cross sectional structure shown in (A) of Fig. 1 is dipped in pure water (for 4 hr at a water temperature of about 80° C in the present example) to impregnate the aluminum oxide layer 12 through the polybutadiene resin undercoat layer 19, the silver paste layer 16, the graphite layer 15 and the pyrrole polymer layer 13. Since the undercoat layer 19, silver paste layer 16 and graphite layer 15 are comparatively water-permeable, the water passes through these layers and reaches the aluminum oxide layer 12.

Thereafter, the solid electrolytic capacitor element is extracted from the water and aging is performed at room temperature by applying a voltage which is 1.2 to 2.0 times higher than the rated voltage of the capacitor using the terminal 18 as an anode and the terminal 17 as a cathode, by way of example.

Subjecting the capacitor element to adsorptive permeation of pure water and aging in the above manner insulates the region 13a of the polypyrrole layer 13 near the defect interface where the region has grown into the interface of the defect 14.

Fig. 3(A) is a view illustrating the distribution of leakage current LC of the solid electrolytic capacitor before the above-described aging treatment, and Fig. 3(B) is a view illustrating the distribution of leakage current LC of the solid electrolytic capacitor after the above-described aging treatment. As shown in Figs. 3-(A) and 3(B), the leakage current LC of the capacitor element before aging centers on 100 µA or more. When the element is subjected to aging, however, the leakage current LC centers on about 0.01 µA. Thus, it is experimentally verified that carrying out the aging treatment results in a great improvement in terms of leakage current LC.

It should be noted that almost no change in the dielectric loss (tan $\delta$) of the capacitor is observed irrespective of whether the capacitor element is aged or not.

From the fact that an improvement in leakage current LC is achieved without increasing dielectric loss by subjecting the capacitor element to adsorptive permeation and aging, it can be surmised that the leakage current LC is markedly reduced by insulating the polypyrrole layer 13a at the interface of the defect 14 of the aluminum oxide layer 12, which defect is the chief cause of the leakage current LC.

Upon considering the reasons why insulation is achieved by the foregoing aging treatment, it is believed that the following phenomenon occurs within the capacitor element.

Specifically, it is believed that the aging treatment causes an oxidation reaction or a reaction accompanied by an exchange of protons between the polypyrrole molecules of the polypyrrole layer 13 and the water ($H_2O$) molecules permeating the interior of the capacitor element and adsorbed thereon, and that as a result of this reaction, a portion of the pyrrole polymer layer 13, especially the polypyrrole 13a which has grown in the defect 14 of the aluminum oxide layer 12, changes from a semiconductor to an insulator.

In particular, the end of the polypyrrole layer region 13a which has grown into the interface of the defect 14 of aluminum oxide layer 12 defines an acute angle. It is believed that current collects in this region and causes the generation of heat, as a result of which the aforementioned reaction readily occurs.

After the above-described aging treatment, the water content permeating the capacitor element is removed. To accomplish this, the element is subjected to a drying treatment while the rated voltage is applied thereto in a high-temperature atmosphere (about 120° C). This completes the fabrication of the solid electrolytic capacitor element. If necessary, a resin molded cladding can be applied to the undercoat layer 19 to complete the fabrication of the solid electrolytic capacitor of the invention.

Fig. 4 is a view showing leakage current - voltage characteristics before and after the aforementioned aging treatment. Voltage ratio, namely the ratio (%) of applied voltage to rated voltage, is plotted along the horizontal axis, and the leakage current LC (µA) is plotted along the vertical axis. Curve A indicates the change in leakage current after the aging treatment, and curve B indicates the change in leakage current before the aging treatment. The positive (+) side is for a case where voltage is applied using the terminal 18 as the anode and the terminal 17 as the cathode. The negative side is for a case where voltage is applied using the terminal 17 as the anode and the terminal 18 as the cathode.

It will be readily understood from Fig. 4 that voltage may be applied to the solid electrolytic capacitor within the rated voltage range without taking polarity into consideration. In other words, it is possible to use the capacitor irrespective of polarity. The reason for this is the aging treatment, namely the insulation of the region 13a of pyrrole polymer layer 13 near the defect interface of defect 14 of the aluminum oxide layer 12.

Fig. 5 is a view showing the results of experiments regarding leakage current and dielectric loss for a solid electrolytic capacitor C perfected by the aforementioned aging treatment according to the invention, a conventional tantalum solid electrolytic capacitor A and a conventional aluminum solid electrolytic capacitor B.

The upper half of Fig. 5 illustrates the experimental results regarding leakage current LC. The results are based on experimental capacitors having a rated voltage of 6.3 V and a capacitance of 4.7 μF. It is shown that the solid electrolytic capacitor C of the invention has a leakage current of about 0.01 μA, which is very low in comparison with the conventional tantalum solid electrolytic capacitor A (0.02 μA) and conventional aluminum solid electrolytic capacitor B (0.42 μA).

The lower half of Fig. 5 illustrates the experimental results regarding dielectric loss (tan δ) at 10 KHz. The results are based on experimental capacitors having the aforementioned rated voltage of 6.3 V and a capacitance of 4.7 μF. It is shown that the solid electrolytic capacitor C of the invention has a dielectric loss (tan δ) of about 3%, which is very low in comparison with the conventional tantalum solid electrolytic capacitor A (about 52%) and conventional aluminum solid electrolytic capacitor B (about 21%).

It is evident from the experimental results shown in Fig. 5 that the solid electrolytic capacitor of the present invention has a low leakage current and little dielectric loss (tan δ) and exhibits excellent capacitor characteristics in comparison with the conventional solid electrolytic capacitors.

In the above-described embodiment, the resin undercoat layer 19 is applied to the capacitor element. The purpose of this layer is to prevent the moisture impregnating the capacitor element from vanishing during the aging treatment. The means for preventing this loss of the moisture impregnating the element is not limited to the undercoat layer 19. In other words, any means will suffice so long as the the capacitor element can maintain the adsorbed water or at least the solution containing the water during the ageing treatment. For example, a method whereby the capacitor element is immersed in a constant temperature and constant humidity tank kept at 40°C and 90 to 95% of humidity and voltage for ageing is applied is effective to insulate the defect of the polymer layer.

An effective method of insulating the region 13a of the polypyrrole layer 13 near the defect interface of the aluminum oxide layer 12 entails subjecting the capacitor element to permeation and absorption of water or a solution containing at least water and applying a predetermined DC voltage or AC voltage across the terminals 17, 18. However, it is obvious that other means for effecting the above-mentioned insulation can be adopted.

Further, in the above-described embodiment, aluminum is used as the metal plate constituting the body of the capacitor element. However, provided that the metal is capable of having the dielectric oxidation layer formed thereon, a plate of tantalum, niobium or titanium can be used. The metal body can be formed by sintering.

Also, in place of a polymer of pyrrole a polymer of furan or thiophene can be used. Polymer layers of these heterocylic compounds can be formed on the dielectric oxidation layer by electrolytic oxidation polymerization in a solution containing these heterocylic compounds, if the electrolyte solution in which the heterocylic compound is dissolved is held at the aforementioned low temperatures and electrolytic oxidation polymerization is carried out in the electrolyte solution; the polymer layers of these heterocyclic compounds near the defect interface of the aluminum oxide layer can also be changed from a semiconductor to an insulator.

In the above-described embodiment, the conductive layer is formed over the entire surface of the polymer layer. However, since the purpose of the conductive layer is to electrolytically connect the inner end of the terminal to the polymeric layer, it is not always necessary to form the conductive layer on the entire surface of the polymer layer. In other words, the conductive layer may be formed in a portion only of the polymer layer surface having regard to the production cost, structure, and electrical characteristics. Further, in the above-described embodiment, the conductive layer consists of two layers, namely the graphite layer 15 and silver paste layer 6. However, the conductive layer structure is not limited thus, but may be of single or multiple layers. Moreover, the conductive material used is not specifically limited to the above-mentioned material as long as an electrically conductive layer is formed.

Also, terminals having various shapes and structure, such as a wire or a lug, may be used to suit the capacitor application. In case of a chip-type (lead-less type) capacitor, the metal plate 11 or the conductive layer itself may be used as the terminal.

In accordance with the invention as described hereinabove, the polymer layer of the heterocyclic compound near the defect interface of the dielectric oxidation layer is converted into an insulator, thereby providing a solid electrolytic capacitor using a layer of a polymer of a heterocyclic compound as an electrolyte which, in comparison with the conventional solid electrolytic capacitor using a polymer layer of a heterocyclic compound, has a markedly reduced capacitor leakage current without an increased equivalent

series resistance (ESR), namely without an increased capacitor dielectric loss (tan δ).

Further, if the leakage current and dielectric loss are reduced and voltage is within a fixed range, there can be provided a solid electrolytic capacitor having excellent capacitor characteristics not achievable with the conventional solid electrolytic capacitor, namely so-called non-polar characteristics are substantially the same regardless of which terminals of the capacitor are used as the anode and cathode.

Fig. 6 is a view illustrating a process for forming the polymer layer of the heterocyclic compound. The apparatus includes an electrolytic bath 22 accommodating the electrolyte solution L. The electrolyte solution L is prepared by dissolving 0.05 mol (3.0 g) pyrrole and, as the supporting electrolyte, about 0.02 mol (6.0 g) ammonium borodisalicylate (ABS) in 1 ℓ acetonitrile or acetone as the solvent. A pair of stainless steel plates 23, 23 are immersed in the electrolyte solution L inside the electrolytic bath 22, as well as an aluminum substrate 21 interposed between the stainless steel plates 23, 23. The aluminum substrate 21 is obtained by forming an aluminum oxide layer on an aluminum plate. The anode of a DC power supply 24 is connected directly to the aluminum substrate 21, and the cathode of the DC power supply 24 is connected to both of the stainless steel plates 23, 23.

During the process for forming the polypyrrole layer, the electrolyte solution L in the electrolytic bath 22 is held at a low temperature (e.g. -40 °C). Under these conditions, a current of a predetermined value (e.g. about 10 $mA/cm^2$) is passed continuously across the aluminum substrate 21 and each of the stainless steel plates 23, 23 for 10 min to give rise to electrolytic oxidation polymerization, thereby forming the polypyrrole layer on the aluminum oxide of the aluminum substrate 21. After the polypyrrole layer is formed by electrolytic oxidation polymerization, the surface of the aluminum substrate 21 coated with the polypyrrole layer is washed with pure water.

A procedure exactly the same as the foregoing is employed to form the graphite layer 15 and silver paste layer 16 on the aluminum substrate 21 having the polypyrrole layer formed thereon.

It was verified that the polypyrrole layer could be formed on the surface of the anodic aluminum substrate 21 in good order by maintaining the electrolyte solution at a low temperature. The reason for this is surmised to be that the molecular motion of the monomer and oligomer on the anode surface is slowed down so that they stop near the surface of the anode without being diffused into the solution, as a result of which the formation of the polypyrrole layer takes place satisfactorily. In addition, the reaction of the aluminum is suppressed by the low temperature.

Fig. 8 is a view showing the relationship between the electrolyte solution temperature and polypyrrole layer formation. In this diagram, the capacitance of a capacitor having a prescribed rated capacitance, after the polypyrrole layer formation, is formed is plotted on the vertical axis with the rated capacitance as 100, and the electrolyte solution temperature is plotted along the horizontal axis. The electrolyte solution components are acetonitrile as the solvent, 0.4 wt.% ammonium borodisalicylate as the supporting electrolyte and 0.5 wt.% pyrrole. The time taken for electrolytic oxidation polymerization is approximately 10 minutes.

As shown in Fig. 8, when the polypyrrole layer is formed on the surface of the aluminum substrate 21 by carrying out electrolytic oxidation polymerization at an electrolytic solution temperature higher than -25 °C, the capacitance of the capacitor obtained becomes low compared to when it is formed at an electrolyte solution temperature lower than -25 °C, and also the capacitance values becomes dispersed in a wide range. This indicates that the polypyrrole layer is not formed uniformly over the specified portions. Thus it is verified that electrolytic oxidation polymerization should be carried out with the electrolyte solution temperature lower than -25 °C.

## Claims

**1.** A solid electrolytic capacitor having a capacitor element comprising:

a metal body (11); a dielectric layer (12) of an oxide formed on a surface of said metal body; a polymer layer (13) of a heterocyclic compound as solid electrolyte formed on said dielectric layer; a conductive layer (15, 16) formed on at least a portion of said polymer layer; and terminals (17, 18) provided respectively on said metal body and said conductive layer;

characterised in that said polymer layer (13) around defect interfaces (14) of the oxidised dielectric layer (12) has been converted into insulator regions (13a).

**2.** A solid electrolytic capacitor as claimed in Claim 1, wherein the metal body (11) is of aluminum, tantalum, niobium or titanium.

**3.** A solid electrolytic capacitor as claimed in Claim 1 or 2, wherein said heterocyclic compound is

selected from pyrrole, furan and thiophene.

**4.** A solid electrolytic capacitor as claimed in Claim 3, wherein said polymer layer comprises a polypyrrole layer.

**5.** A method of making a solid electrolytic capacitor as claimed in any of Claims 1 to 4, which comprises forming on a surface of a metal body (11) a dielectric layer (12) of an oxide; forming a polymer layer (13) of a heterocyclic compound as solid electrolyte on said dielectric layer; forming on at least a portion of the polymer layer an electrically conductive layer (15, 16) and providing a terminal (18) on the metal body and a terminal (17) on the conductive layer; and
characterised by converting the polymer layer (13) around defect interfaces (14) of the dielectric layer into insulator regions (13a).

**6.** A method as claimed in Claim 5, wherein the conversion of the portions of said polymer layer (13) into said insulator comprises impregnating the plate having the coating of oxide, polymer and conductive layer with water or solution containing at least water, applying a potential across the terminals of said metal plate and conductive layer whilst keeping said water or solution containing at least water in the polymer layer during said application of voltage.

**7.** A method as claimed in Claim 6, wherein the voltage applied is 1.2 to 2.0 times higher than the rated voltage of the capacitor.

**8.** A method as claimed in Claim 6 or 7, wherein an overcoat layer (19) was applied over the capacitor element to retain the moisture during the application of the potential.

**9.** A method as claimed in Claim 6, 7 or 8, wherein the polymer layer was formed by electrolytic oxidation polymerisation in an electrolyte solution (L) containing the heterocyclic compound and supporting electrolyte.

**10.** A method as claimed in Claim 9, wherein said supporting electrolyte is a boron compound obtained by chemically combining boric acid and any one of the following organic compounds (1) to (4):
(1) an aliphatic or aromatic carboxylic acid, or salt thereof;
(2) an aliphatic or aromatic compound having two or more carbonyl radicals, or salt thereof;
(3) an aliphatic or aromatic compound having at least one hydroxy radical and at least one carboxylic acid radical, or salt thereof; and
(4) an aliphatic or aromatic compound having at least one amine radical and at least one carboxylic acid radical, or salt thereof.

**11.** A method as claimed in any of Claims 6 to 10, wherein the temperature of said electrolyte solution (L) during formation of the polymer layer is kept at less than -25 ° C.

**Revendications**

**1.** Condensateur électrolytique solide ayant un élément de condensateur comprenant :
- un corps métallique (11), une couche diélectrique (12) d'un oxyde forme sur une surface de ce corps métallique, une couche de polymère (13) d'un composé hétérocyclique en tant qu'électrolyte solide formé sur la couche diélectrique, une couche conductrice (15,16) formée sur au moins une portion de cette couche de polymère, et des bornes (17,18) prévues respectivement sur le corps métallique et sur la couche conductrice,

caractérisé en ce que la couche de polymère (13) autour des interfaces défectueuses (14) de la couche diélectrique oxydée (12) a été convertie en région isolante (13a).

**2.** Condensateur électrolytique solide selon la revendication 1, dans lequel le corps métallique (11) est en aluminium, en tantale, en niobium ou en titane.

**3.** Condensateur électrolytique solide selon la revendication 1 ou la revendication 2, dans leque le composé hétérocyclique est choisi parmi le pyrrole, le furanne et le thiophène.

4. Condensateur électrolytique solide selon la revendication 3, dans lequel la couche de polymère est une couche de polypyrrole.

5. Procédé pour fabriquer un condensateur électrolytique solide selon l'une des revendications 1 à 4, qui consiste à former sur une surface d'un corps métallique (11) une couche diélectrique (12) d'un oxyde, à former une couche de polymère (13) d'un composé hétérocyclique en tant qu'électrolyte solide sur cette couche diélectrique, à former sur au moins une portion de la couche de polymère une couche électriquement conductrice (15,16) et à prévoir une borne (18) sur le corps métallique et une borne (17) sur la couche conductrice, ce procédé étant caractérisé en ce qu'on convertit la couche de polymère (13) entourant les interfaces défectueuses (14) de la couche diélectrique en région isolante (13a).

6. Procédé selon la revendication 5, dans lequel la conversion des portions de la couche de polymère (13) en région isolante consiste à imprégner la plaque sur laquelle se trouve un revêtement d'oxyde, une couche de polymère et une couche conductrice avec de l'eau ou une solution contenant au moins de l'eau, à appliquer un potentiel entre les bornes de la plaque métallique et de la couche conductrice, tout en maintenant dans la couche de polymère l'eau ou la solution contenant au moins de l'eau pendant l'application du courant.

7. Procédé selon la revendication 6, dans lequel la tension appliquée est 1,2 à 2,0 fois supérieure à la tension nominale du condensateur.

8. Procédé selon la revendication 6 ou la revendication 7, dans lequel une couche de revêtement (19) est appliquée sur l'élément de condensateur pour conserver l'humidité pendant l'application du potentiel.

9. Procédé selon l'une des revendications 6 à 8, dans lequel la couche de polymère est formée par polymérisation par oxydation électrolytique dans une solution d'électrolyte (L) contenant le composé hétérocyclique et un électrolyte support.

10. Procédé selon la revendication 9, dans lequel l'électrolyte support est un composé de bore obtenu en combinant chimiquement l'acide borique et l'un quelconque des composés organiques suivants (1) à (4) :
    (1) un acide carboxylique aliphatique ou aromatique ou un sel d'un tel acide,
    (2) un composé aliphatique ou aromatique ayant deux radicaux carbonyle ou davantage, ou un sel de ce composé,
    (3) un composé aliphatique ou aromatique ayant au moins un radical hydroxy et au moins un radical acide carboxylique, ou un sel de ce composé, et
    (4) un composé aliphatique et un composé aromatique ayant au moins un radical amine et au moins un radical acide carboxylique, ou un sel de ce composé.

11. Procédé selon l'une des revendications 6 à 10, dans lequel la température de la solution d'électrolyte (L) est maintenue, pendant la formation de la couche de polymère, à moins de -25 ° C.

**Patentansprüche**

1. Festelektrolytkondensator mit einem Metallkörper (11), einer dielektrischen Schicht (12) eines auf einer Oberfläche des Metallkörpers gebildeten Oxids, einer Polymerschicht (13) aus einer heterozyklischen Verbindung als Festelektrolyt, die auf der dielektrischen Schicht gebildet ist, einer leitenden Schicht (15, 16) auf Wenigstens einem Teil der Polymerschicht und Anschlüssen (17, 18) am Metallkörper und der leitenden Schicht, dadurch gekennzeichnet, daß die Polymerschicht (13) um defekte Stoßflächen (14) der oxidierten dielektrischen Schicht (12) herum in Isolierbereiche (13a) umgewandelt worden ist.

2. Festelektrolytkondensator nach Anspruch 1, dadurch gekennzeichnet, daß der Metallkörper (11) aus Aluminium, Tantal, Niob oder Titan besteht.

3. Festelektrolytkondensator nach Anspruch 1 oder 2, dadurch gekennzeichnet, daß die heterozyklische Verbindung ausgewählt ist aus Pyrrol, Furan und Thiophen.

4. Festelektrolytkondensator nach Anspruch 3, dadurch gekennzeichnet, daß die Polymerschicht eine

PolypyrrolSchicht umfaßt.

**5.** Verfahren zur Herstellung eines Festelektrolrtkondensators nach einem der Ansprüche 1 bis 4, umfassend die Bildung einer oxidischen dielelektrischen Schicht (12) auf einer Oberfläche eines Metallkörpers (11), Bildung einer Polymerschicht (13) aus einer heterozyklischen Verbindung als Feststoffelektrolyt auf der genannten dielektrischen Schicht, Bildung einer elektrisch leitfähigen Schicht (15, 16) auf wenigstens einem Abschnitt der Polymerschicht und Anbringung eines Anschlusses (18) am Metallkörper und eines Anschlusses (17) an der leitenden Schicht, dadurch gekennzeichnet daß die Polymerschicht (13) um Stoßflächendefekte (14) der dielektrischen Schicht herum in Isolierbereiche (13a) umgewandelt wird.

**6.** Verfahren nach Anspruch 5, dadurch gekennzeichnet, daß die Umwandlung der Abschnitte der Polymerschicht (13) in Isolierbereiche eine Imprägnierung der Platte mit dem Oxidüberzug, dem Polymer und der leitenden Schicht mit Wasser oder einer zumindest Wasser enthaltenden Lösung umfaßt und daß ein Potential über die Anschlüsse der Metallplatte und der leitenden Schicht angelegt wird, während gleichzeitig das Wasser bzw. die wenigstens Wasser enthaltende Lösung in der polymerschicht während der Spannungsanwendung gehalten wird.

**7.** Verfahren nach Anspruch 6, dadurch gekennzeichnet, daß die angelegte Spannung 1,2 bis 2 mal höher ist als die veranschlagte Spannung des Kondensators.

**8.** Verfahren nach Anspruch 6 oder 7, dadurch gekennzeichnet, daß eine Überzugsschicht (19) auf das Kondensatorelement aufgebracht wird, um die Feuchtigkeit während des Anlegens der Spannung zurückzuhalten.

**9.** Verfahren nach Anspruch 6, 7 oder 8, dadurch gekennzeichnet, daß die Polymerschicht durch elektrolytische Oxidationspolimerisation in einer elektrolytischen Lösung (L) gebildet wurde, welche die heterozyklische Verbindung und einen Unterstützungselektrolyt enthält.

**10.** Verfahren nach Anspruch 9, dadurch gekennzeichnet, daß der Unterstützungselektrolyt eine Borverbindung ist, die durch eine chemische Reaktion von Borsäure und einer der folgenden organischen Verbindungen (1) bis (4) erhalten wird:

(1) eine aliphatische oder aromatische Carboxylsäure, oder deren Salz,

(2) eine aliphatische oder aromatische Verbindung mit zwei oder mehr Carbonylradikalen, oder deren Salz,

(3) eine aliphatische oder aromatische Verbindung mit wenigstens einem Hydroxyradikal und wenigstens einem Carboxylsäureradikal, oder deren Salz, und

(4) eine aliphatische oder aromatische Verbindung mit wenigstens einem Aminradikal und wenigstens einem Carboxylsäureradikal, oder deren Salz.

**11.** Verfahren nach einem der Ansprüche 6 bis 10, dadurch gekennzeichnet, daß die Temperatur der Elektrolytlösung (L) während der Bildung der Polymerschicht unter -25 °C gehalten wird.

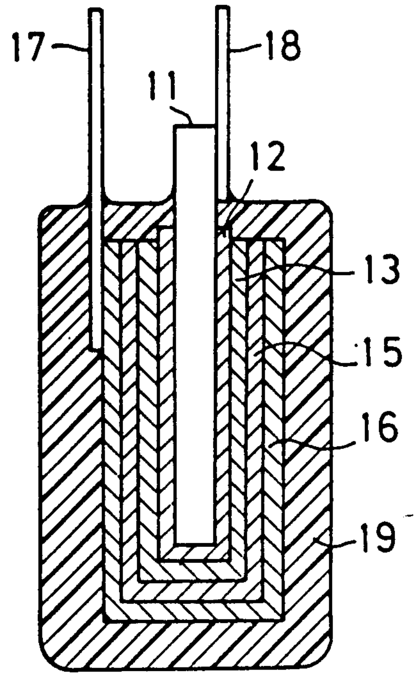


(A)

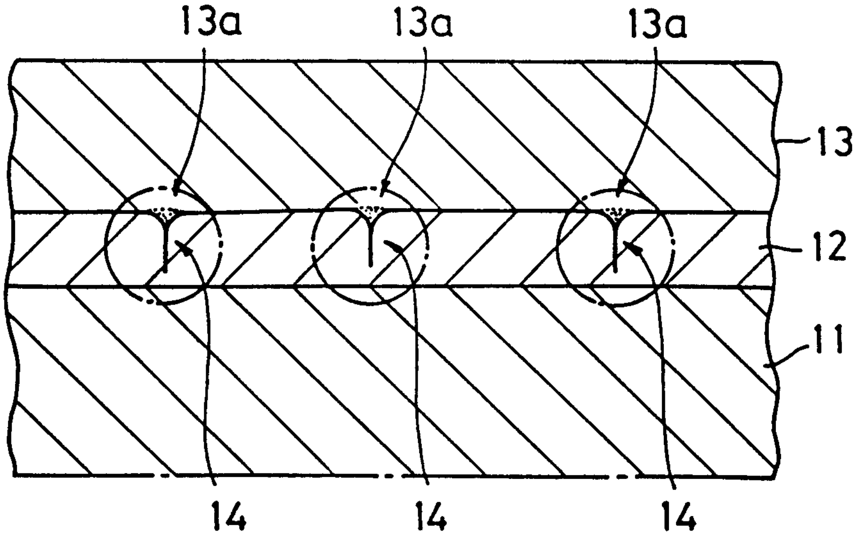


(B)

Fig.1

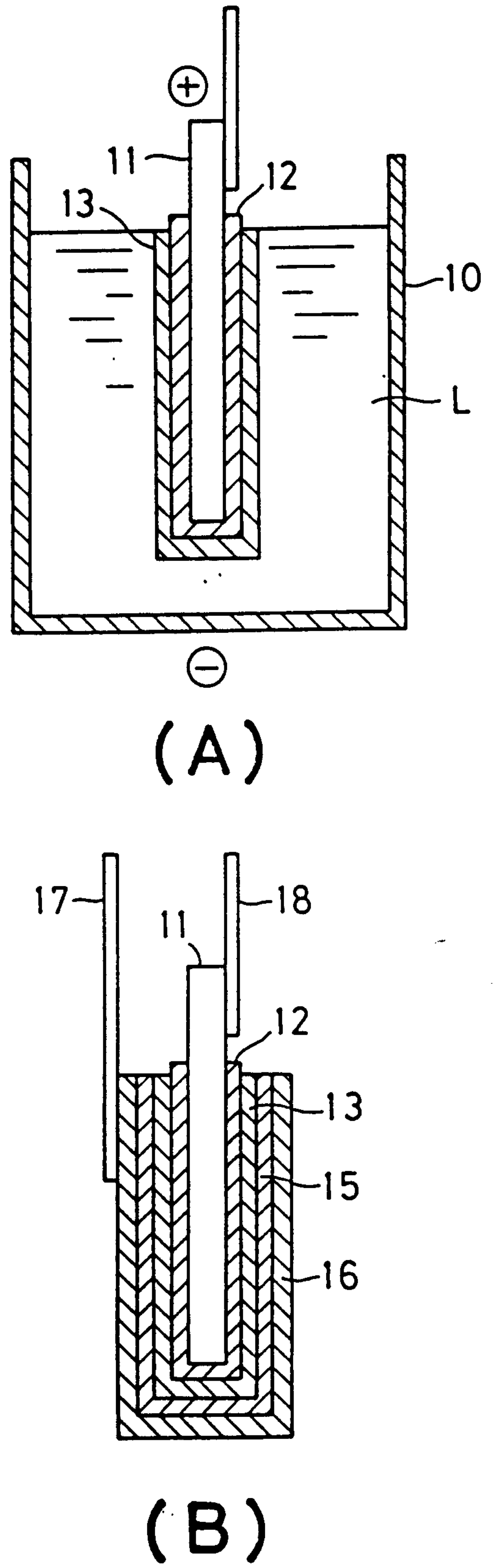


Fig.2

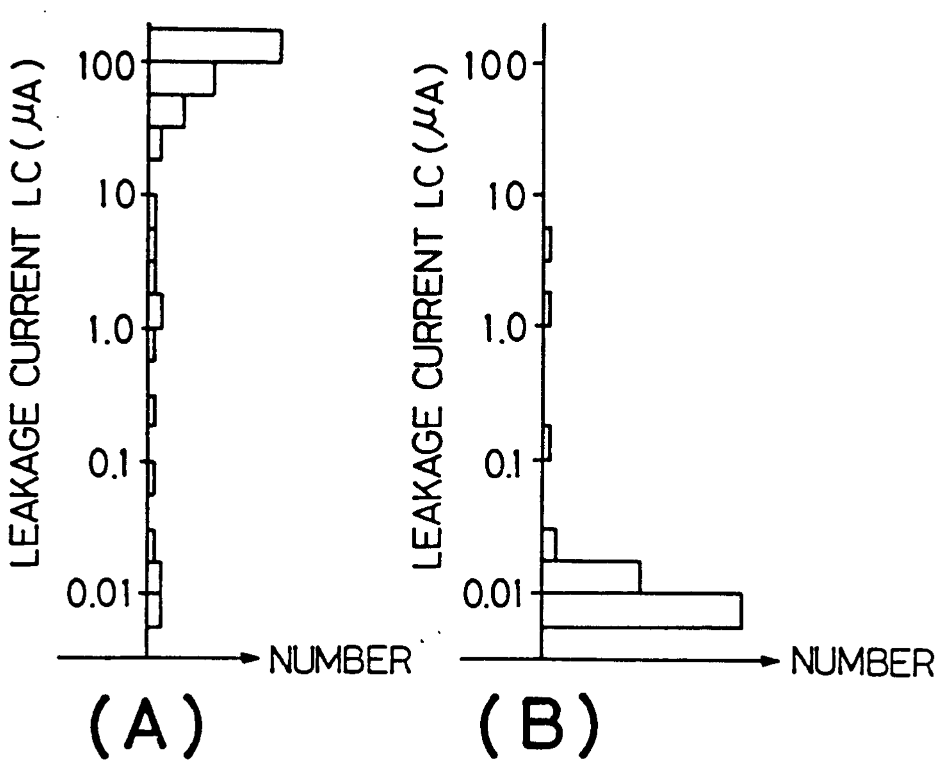


LEAKAGE CURRENT DISTRIBUTION

Fig.3

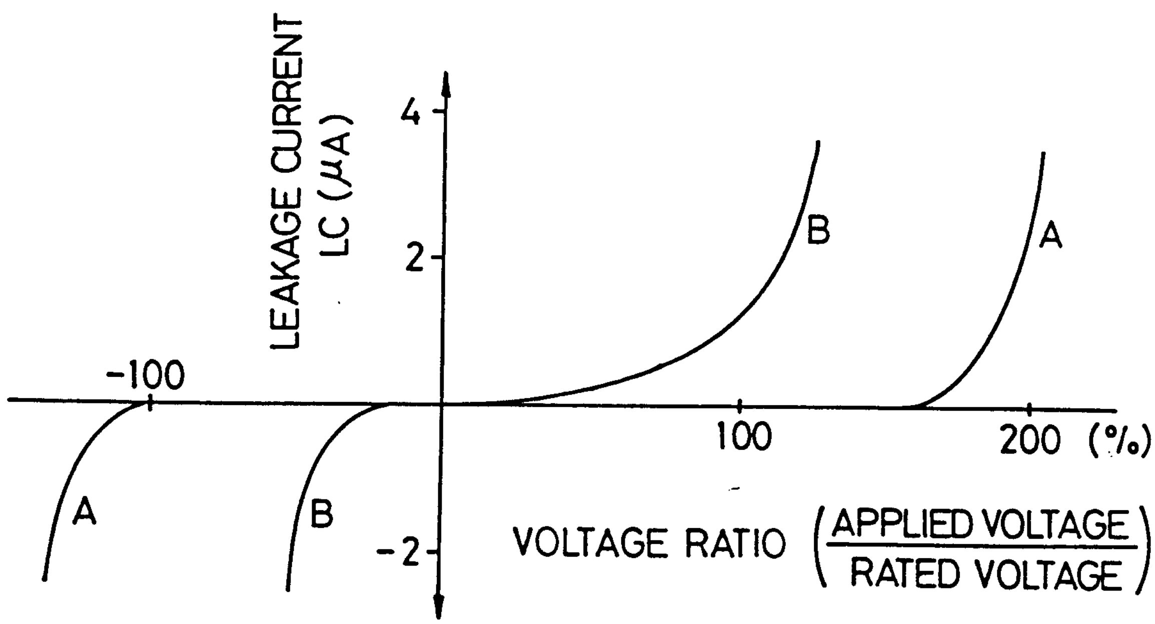


LEAKAGE CURRENT—VOLTAGE CHARACTERISTICS

Fig.4

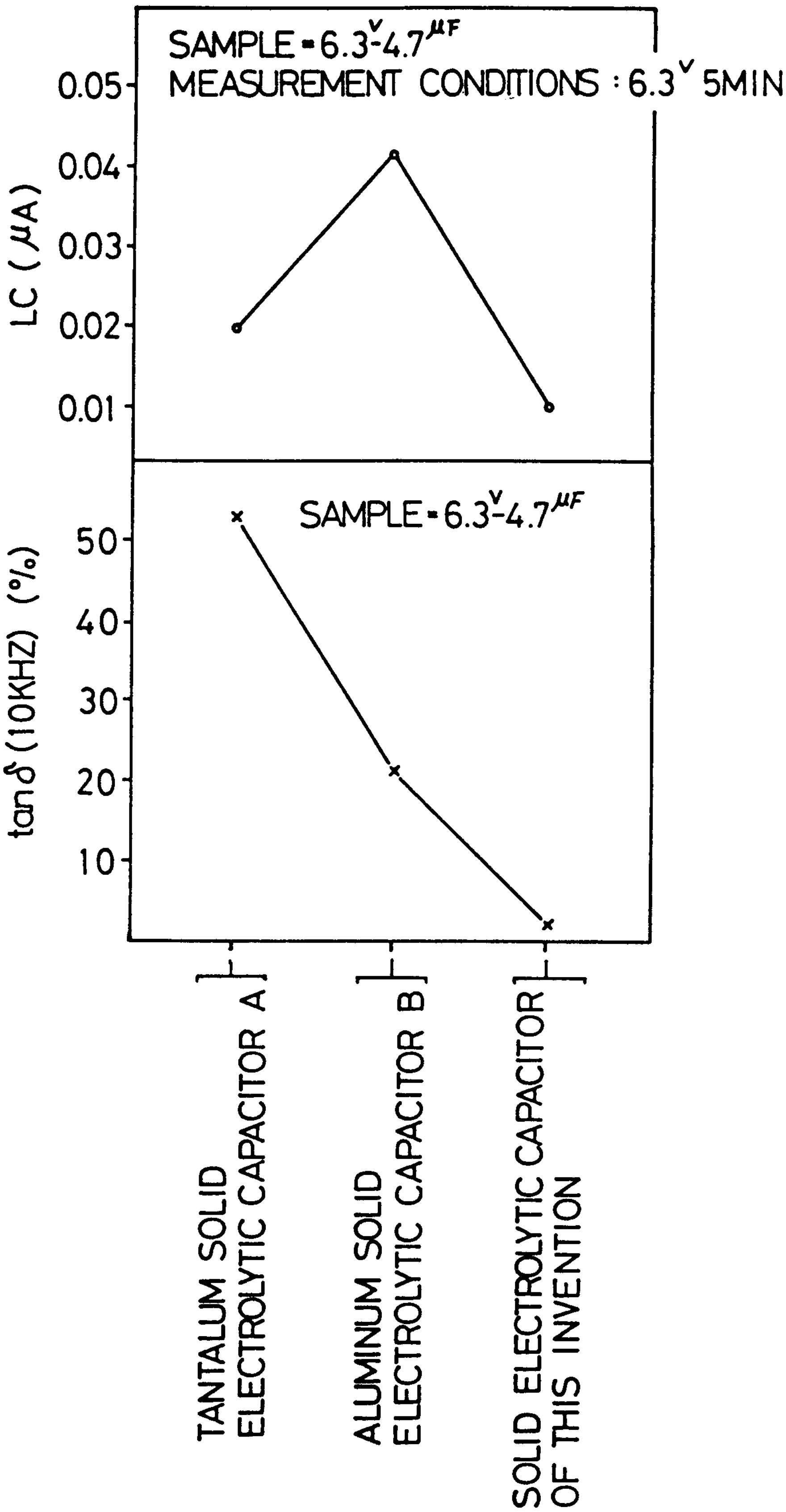
SAMPLE = 6.3V-4.7μF
MEASUREMENT CONDITIONS : 6.3V 5MIN
LC (μA)
0.05
0.04
0.03
0.02
0.01
SAMPLE = 6.3V-4.7μF
tanδ (10KHZ) (%)
50
40
30
20
10
TANTALUM SOLID ELECTROLYTIC CAPACITOR A
ALUMINUM SOLID ELECTROLYTIC CAPACITOR B
SOLID ELECTROLYTIC CAPACITOR OF THIS INVENTION

Fig.5

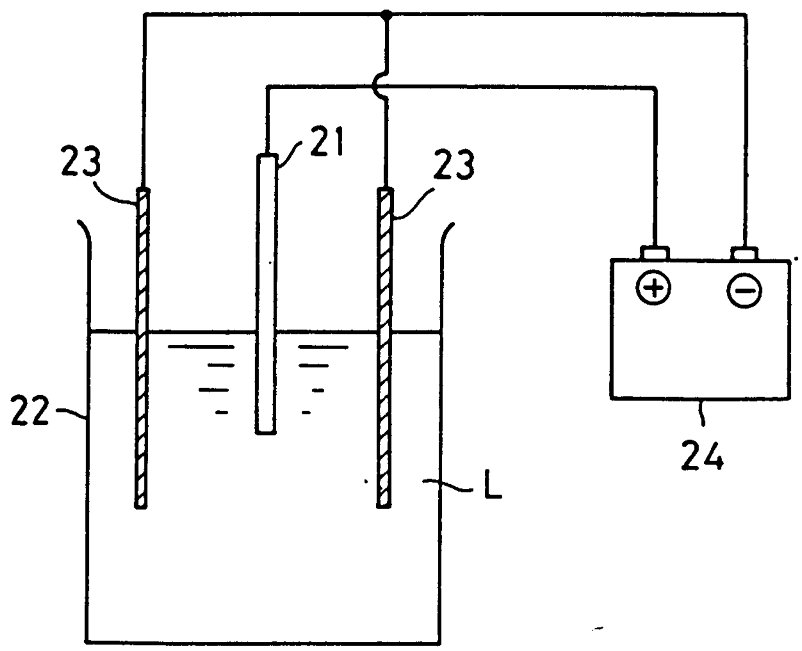
21
23
23
22
L
24

Fig.6

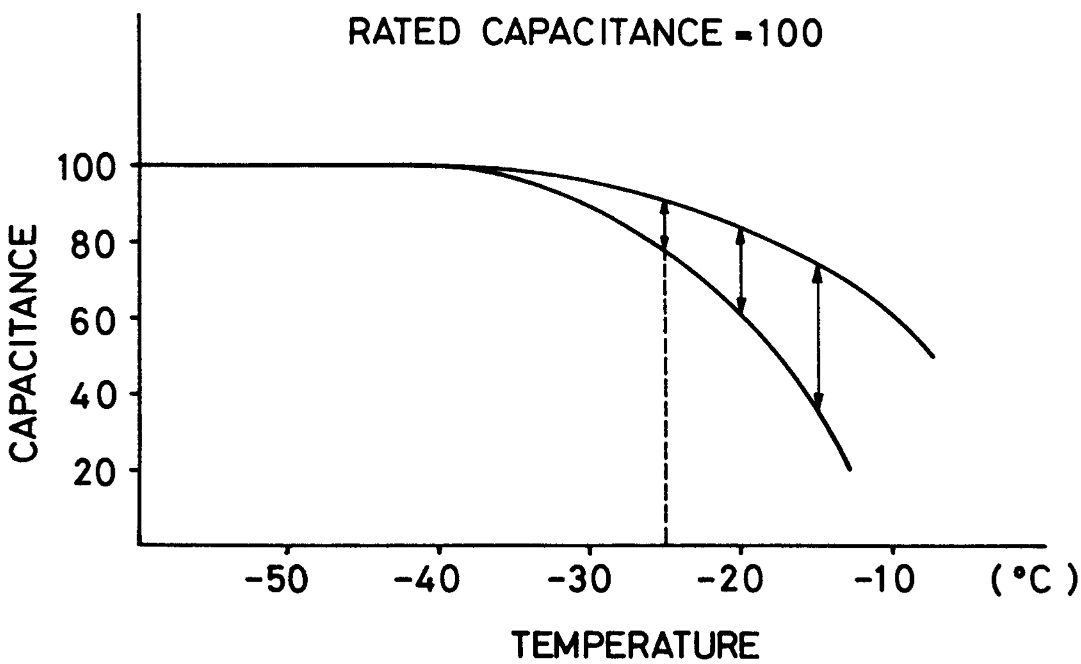
RATED CAPACITANCE =100
100
80
60
40
20
CAPACITANCE
-50
-40
-30
-20
-10
(°C)
TEMPERATURE

Fig.7